# EUROPEAN PATENT APPLICATION

(11) **EP 3 614 288 A1**
(43) Date of publication of application: **26.02.2020**
(21) Application number: 18203358.9
(22) Date of filing: 30.10.2018
(51) Int. Cl.: G06F 21/62, G06F 21/60

(54) **SYSTEM AND METHOD FOR PROVIDING ACCESS TO A USER BASED ON A MULTI-DIMENSIONAL DATA STRUCTURE**

(30) Priority: 21.08.2018 US 201816105970
(71) Applicant: HCL Technologies Limited, 201 301 Uttar Pradesh (IN)
(72) Inventor: Sen, Kinnar Kumar, Sunnyvale, CA California 94085 (US)
(74) Representative: Potter Clarkson

(57) **Abstract**

The present disclosure relates to system(s) and method(s) for providing access to a user based on a multi-dimensional data structure. The system obtains one or more inputs from a user to access a target data point from a columnar database. The one or more inputs corresponds to one or more entities, associated with the user. Further, the system generates a user bitmap based on the one or more entities. Furthermore, the system generates a user tag associated with the user based on a bitwise AND operation between the user bitmap and an entity position bitmap. The system provides an access to the user based on comparison of the user tag and a data tag, associated with the target data point, and a number of entities, associated with the user, and a cardinality of the user tag.

## Description

### CROSS-REFERENCE TO RELATED APPLICATIONS AND PRIORITY

The present application claims benefit from US Complete Patent Application No 16/105,970 filed on 21 August 2018 the entirely of which is hereby incorporated by reference.

### TECHNICAL FIELD

The present disclosure in general relates to the field of access to a columnar database. More particularly, the present invention relates to a system and method for providing access to a user based on a multi-dimensional data structure.

### BACKGROUND

Generally, data stored in a columnar database is accessible to a user once the user provide credentials for accessing the data. Further, some of access control techniques are used to protect the data. In one aspect, a role base access control technique is also used to provide secured access to the data stored in the database. Further, some of systems are available that provides access to the user based on comparison of tags that adds some latency into the system too. The tags are stored as bytes or strings. There is a possibility of a sniffing or other similar attack during comparison of the tags. Also, it must be understood that most of the access control techniques provide security at an application level only. Hence, if in case the system is broken, the tags are exposed which enables easy access to the data. There is need to device a data structure that is concise, able to capture/hold a lot of varied information and simple to evaluate. Also, there is a need of a data structure that is not easily comprehendible for extraction of information by a third party even if the system is compromised. It must be understood that there is a need of technology that provides both application level security and data security.

### SUMMARY

Before the present systems and methods for providing access to a user based on a multi-dimensional data structure, is described, it is to be understood that this application is not limited to the particular systems, and methodologies described, as there can be multiple possible embodiments which are not expressly illustrated in the present disclosure. It is also to be understood that the terminology used in the description is for the purpose of describing the particular versions or embodiments only, and is not intended to limit the scope of the present application. This summary is provided to introduce concepts related to systems and method for providing access to the user based on a multi-dimensional data structure. This summary is not intended to identify essential features of the claimed subject matter nor is it intended for use in determining or limiting the scope of the claimed subject matter.

In one implementation, a method for providing access to a user based on a multi-dimensional data structure is illustrated. In one embodiment, the method may comprise obtaining one or more inputs from a user to access a target data point, associated with a columnar database. The target data point may correspond to one of a row, a cell, or a column of the columnar database. The one or more inputs may correspond to one or more entities, associated with the user, and information associated with the target data point. Further, the method may comprise generating a user tag associated with the user. In one embodiment, a user bitmap, associated with the user, may be generated. The user bitmap may be generated based on the one or more entities. In one aspect, the user bitmap may comprise bitmap position value for the one or more entities. Further, the user tag may be generated based on a bitwise AND operation between the user tag and an entity position bitmap. The entity position bitmap may comprise a bit 1 at each bitmap position. Further, the method may comprise providing an access to the user based on comparison of the user tag and a data tag, associated with the target data point, stored in the columnar database, and comparison of number of entities, associated with the user, and a cardinality of the user tag.

In another implementation, a system for providing access to a user based on a multi-dimensional data structure is illustrated. The system comprises a memory and a processor coupled to the memory, further the processor is configured to execute programmed instructions stored in the memory. In one embodiment, the processor may execute programmed instructions stored in the memory for obtaining one or more inputs from a user to access a target data point, associated with a columnar database. The data point may correspond to one of a row, a cell or a column of the columnar database. The one or more inputs may correspond to one or more entities, associated with the user, and information associated with the target data point. Further, the processor may execute programmed instructions stored in the memory for generating a user tag associated with the user. In one embodiment, a user bitmap, associated with the user, may be generated. The user bitmap may be generated based on the one or more entities. In one aspect, the user bitmap may comprise bitmap position value for the one or more entities. Further, the user tag may be generated based on a bitwise AND operation between the user tag and an entity position bitmap. The entity position bitmap may comprise a bit 1 at each bitmap position. Further, the processor may execute programmed instructions stored in the memory for providing an access to the user based on comparison of the user tag and a data tag, associated with the target data point, stored in the columnar database, and comparison of number of entities, associated with the user, and a cardinality of the user tag.

In yet another implementation, a computer program product having embodied computer program for providing access to a user based on a multi-dimensional data structures is disclosed. In one embodiment, the program may comprise a program code for obtaining one or more inputs from a user to access a target data point, associated with a columnar database. The target data point may correspond to one of a row, a cell or a column of the columnar database. The one or more inputs may correspond to one or more entities, associated with the user, and information associated with the target data point. Further, the program may comprise a program code for generating a user tag associated with the user. In one embodiment, a user bitmap, associated with the user, may be generated. The user bitmap may be generated based on the one or more entities. In one aspect, the user bitmap may comprise bitmap position value for the one or more entities. Further, the user tag may be generated based on a bitwise AND operation between the user tag and an entity position bitmap. The entity position bitmap may comprise a bit 1 at each bitmap position. Further, the program may comprise a program code for providing an access to the user based on comparison of the user tag and a data tag, associated with the target data point, stored in the columnar database, and comparison of number of entities, associated with the user, and a cardinality of the user tag.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates a network implementation of a system for providing access to a user based on a multi-dimensional data structure, in accordance with an embodiment of the present subject matter.
Figure 2 illustrates the system for providing access to a user based on a multi-dimensional data structure, in accordance with an embodiment of the present subject matter.
Figure 3 illustrates a method for providing access to a user based on a multi-dimensional data structure, in accordance with an embodiment of the present subject matter.
Figure 4 illustrates block diagram of a system providing access to a user based on a multi-dimensional data structure, in accordance with an embodiment of the present subject matter.

### DETAILED DESCRIPTION

Some embodiments of the present disclosure, illustrating all its features, will now be discussed in detail. The words "obtaining", "generating", "determining", "providing" and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a", "an" and "the" include plural references unless the context clearly dictates otherwise. Although any systems and methods similar or equivalent to those described herein can be used in the practice or testing of embodiments of the present disclosure, the exemplary, systems and methods for providing access to the user based on a multi-dimensional data structure are now described. The disclosed embodiments of the system and method for providing access to a user based on a multi-dimensional data structure are merely exemplary of the disclosure, which may be embodied in various forms.

Various modifications to the embodiment will be readily apparent to those skilled in the art and the generic principles herein may be applied to other embodiments. However, one of ordinary skill in the art will readily recognize that the present disclosure for providing access to a user based on a multi-dimensional structure is not intended to be limited to the embodiments illustrated, but is to be accorded the widest scope consistent with the principles and features described herein.

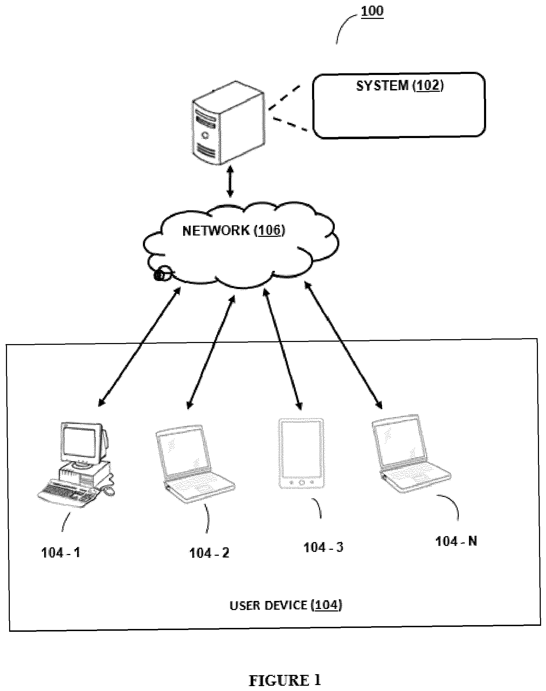

The present subject matter relates to providing access to a user based on a multi-dimensional data structure. In one embodiment, data may be stored in a columnar database. The columnar database may comprise a set of data points corresponding to rows, cells or columns. Further, a data tag, associated with each data point, may be stored in the columnar database along with the data. The data tag may be generated based on sensitivity of the data. The data tag may be used to protect the columns, the cells, or the rows. The data tag may correspond to one or more entities, associated with a user. In one example, the user may be allowed to access one or more data points from the set of data points. Further, one or more inputs may be obtained from a user to access a target data point, associated with the columnar database. The one or more inputs may comprise the one or more entities, associated with the user, and information associated with the target data point. Upon obtaining the one or more inputs, a user bitmap associated with the user may be generated. Further, a user tag, associated with the user, may be generated based on a bitwise AND operation between the user bitmap and an entity position bitmap. Further, the user tag may be compared with a data tag, associated with the target data point. Furthermore, number of entities, associated with the user, and a cardinality of the user tag may be compared. Upon comparison of the user tag and the data tag, and the number of entities and the cardinality of the user tag, the access may be provided to the user. Further, the network implementation of system for providing access to a user based on a multi-dimensional data structure is illustrated with Figure 1.

Referring now to Figure 1, a network implementation 100 of a system 102 for providing access to a user based on a multi-dimensional data structure is disclosed. Although the present subject matter is explained considering that the system 102 is implemented on a server, it may be understood that the system 102 may also be implemented in a variety of computing systems, such as a laptop computer, a desktop computer, a notebook, a workstation, a mainframe computer, a server, a network server, and the like. In one implementation, the system 102 may be implemented over a cloud network. Further, it will be understood that the system 102 may be accessed by multiple users through one or more user devices 104-1, 104-2...104-N, collectively referred to as user device 104 hereinafter, or applications residing on the user device 104. Examples of the user device 104 may include, but are not limited to, a portable computer, a personal digital assistant, a handheld device, and a workstation. The user device 104 may be communicatively coupled to the system 102 through a network 106.

In one implementation, the network 106 may be a wireless network, a wired network or a combination thereof. The network 106 may be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further, the network 106 may include a variety of network devices, including routers, bridges, servers, computing devices, storage devices, and the like.

In one embodiment, the system 102 may be configured to generate a data bitmap, associated with each data point, from a set of data points, in the columnar database. The data bitmap may be corresponding to one or more entities of a user. In one aspect, the user may be allowed to access one or more data points, from the set of data points. Each data point, form the set of data points may correspond to a row, a cell or a column of the columnar database. Once the data bitmap is generated, the system 102 may be configured to perform a bitwise AND operation between the data bitmap and an entity position bitmap. In one aspect, the entity positon bitmap may comprise 1's at each bitmap position. Further, the system 102 may generate a data tag based on the bitwise AND operation. Once the data tag is generated, the system 102 may be configured to store the data tagin the columnar database along with the data. The data tag may be used to protect the cell, the row, the column, a set of cells, a set of columns or a set of rows.

In one embodiment, the system 102 may be configured to obtain one or more inputs from a user. The one or more inputs may be obtained to access a target data point, associated with a columnar database. The target data point may correspond to a targets cell, a target row, or a target column of the columnar database. The one or more inputs may correspond to one or more entities associated with the user. Once the one or more inputs are obtained, the system 102 may be configured to generate a user bitmap. In one embodiment, the user bitmap may comprise bitmap position value associated with the one or more entities. Once the user bitmap is generated, a position of bit, associated with the one or more entities, in the user bitmap may be determined. In one aspect, the positon of bit may be determined using a randomization technique. Further, the system 102 may be configured to generate a user tag associated with the user. In one aspect, the user tag may be generated based on a bitwise AND operation between the user bitmap and the entity position bitmap. In one example, the entity position bitmap may comprise a bit 1 at each bitmap positions.

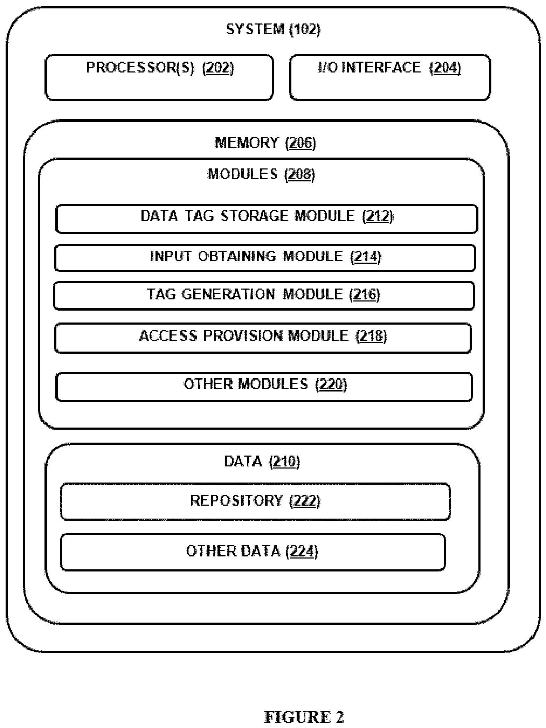

Upon generating the user tag, the system 102 may be configured to compare the user tag, associated with the user, with a data tag, associated with the target data point. Further, the system 102 may be configured to compare a number of entities, associated with the user, with a cardinality of the user tag. In one aspect, the cardinality of the user tag may correspond to number of 1's present in the user tag. Based on the comparison of the user tag and the data tag, and the comparison of the number of entities and the cardinality of the user tag, the system 102 may be configured to provide access to the user. Further, the system for providing access to a user based on a multi-dimensional data structure is elaborated with respect to figure 2.

Referring now to figure 2, the system 102 for providing access to a user based on a multi-dimensional data structure is illustrated in accordance with an embodiment of the present subject matter. In one embodiment, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, at least one processor 202 may be configured to fetch and execute computer-readable instructions stored in the memory 206.

The I/O interface 204 may include a variety of software and hardware interfaces, for example, a web interface, a graphical user interface, and the like. The I/O interface 204 may allow the system 102 to interact with the user directly or through the user device 104. Further, the I/O interface 204 may enable the system 102 to communicate with other computing devices, such as web servers and external data servers (not shown). The I/O interface 204 may facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 may include modules 208 and data 210.

The modules 208 may include routines, programs, objects, components, data structures, and the like, which perform particular tasks, functions or implement particular abstract data types. In one implementation, the module 208 may include data tag storage module 212, an input obtaining module 214, a tag generation module 216, an access provision module 218, and other modules 220. The other modules 220 may include programs or coded instructions that supplement applications and functions of the system 102.

The data 210, amongst other things, serve as a repository for storing data processed, received, and generated by one or more of the modules 208. The data 210 may also include a repository 222, and other data 224. In one embodiment, the other data 224 may include data generated as a result of the execution of one or more modules in the other modules 220.

In one implementation, a user may access the system 102 via the I/O interface 204. The user may be registered using the I/O interface 204 in order to use the system 102. In one aspect, the user may access the I/O interface 204 of the system 102 for obtaining information, providing input information or configuring the system 102.

In one embodiment, the data tag storage module 212 may be configured to generate a data bitmap, associated with each data point, from a set of data points. The set of data points may be associated with a columnar database. Each data point, from the set of data points, may correspond to one of a row, a cell or a column of the columnar database. In one aspect, the data bitmap may be corresponding to one or more entities, associated with a user. In one example, the user may be allowed to access one or more data points, from the set of data points. Once the data bitmap is generated, the data tag storage module 212 may determine positon of bit, associated with the one or more entities, in the data bitmap. In one embodiment, the position of bit may be determined based on randomization techniques. In one example, a hashing algorithm may be used to determine the position of bit in the data bitmap.

In one embodiment, a set of data bitmap, associated with the one or more entities, may be generated. In one example, number of data bitmap generated may be based on a number of entities, associated with the user. In the example, if the number of entities, associated with the user, is 3, then a data bitmap associated with each entity may be generated. Further, the data tag storage module 212 may generate a data bitmap based on combining the data bitmap, associated with each entity. The data bitmap may indicate the one or more entities, associated with the user.

Once the data bitmap is generated, the data tag storage module 212 may generate a data tag, associated with each data point. In one aspect, the data tag may be generated based on a bitwise AND operation between the data bitmap and an entity position bitmap. The entity position bitmap may comprise 1's present at each bitmap position. In one embodiment, the data tag may be configured to comprise bitmap position associated with the one or more entities of the user. Upon generating the data tag, the data tag storage module 212 may be configured to store the data tag in the columnar database. In one aspect, the data tag may be stored along with data stored in the columnar database. In one embodiment, the data tag may be generated at time of storing the data in the columnar database. The data tag may be generated to protect the cell, the column, the row, a set of columns, a set of rows or the set of cells.

Further, the input obtaining module 214 may be configured to obtain one or more inputs from a user to access a target data point from the columnar database. The target data point may be one of the row, the column or the cell in the columnar database. In one aspect, the one or more inputs may correspond to the one or more entities associated with the user. In one example, the one or more entities may correspond to credentials provided by the user.

Upon obtaining the one or more inputs, the tag generation module 216 may be configured to generate a user bitmap associated with the user. In one example, the one or more inputs may be credentials provided by the user. In one embodiment, the user bitmap may be generated based on the one or more entities. In one aspect, the user bitmap may comprise bitmap positon for the one or more entities. In one example, the user bitmap may comprise 1's at the bitmap positions associated with the one or more entities. In one embodiment, the tag generation module 216 may be configured to determine position of bit associated with the one or more entities in the user bitmap. In one aspect, the tag generation module 216 may use a randomization technique to determine the positon of bit. In one example, the hashing algorithm may be used to determine the position of bit. In other words, the positon of bits, in the user bitmap, may be determined randomly. In one embodiment, the process of determining position of bit in the user bitmap may be referred as bitmap position indexing process.

Once the user bitmap is generated, the tag generation module 216 may be configured to generate a user tag, associated with the user. The user tag may be generated based on a bitwise AND operation between the user bitmap and the entity position bitmap. In one aspect, the entity positon bitmap may comprise bit 1's present at each bitmap positon. In one embodiment, the user tag may comprise bit for the one or more entities associated with the user.

Upon generating the user tag, the access provision module 218 may be configured to compare the user tag and a data tag, associated with the target data point. In one aspect, the data tag may be stored in the columnar database. Further, the access provision module 218 may be configured to compare a number of entities, associated with the user, and a cardinality of the user tag. In one aspect, the cardinality of the user tag may correspond to number of 1's present in the user tag. The cardinality of the user tag may be greater than zero.

Upon comparing the user tag and the data tag, and comparing the number of entities and the cardinality of the user tag, the access provision module 218 may be configured to provide an access to the user. If the user tag and the data tag is same, and the number of entities and the cardinality of the user tag is same, then the access provision module 218 may allow the user to access the target data point.

In one exemplary embodiment, consider a columnar database comprising a set of data points with 100 data points. The 100 data points corresponds to 100 columns of the columnar database. In this case, the data tag generation module 212 may generate a data tag, associated with each column, from the 100 columns. The data tag may be further stored in the columnar database. In one aspect, the data tag may be stored along with data in the columnar database. Further, the input obtaining module 214 may obtain one or more inputs from a user to access a target column. The one or more inputs may comprise one or more entities, associated with the user, and information associated with the target column. In this case, the information associated with the target column indicates that the user wants to access column 26 to column 30 from the columnar database. Further, the generation module 216 may generate a user tag, associated with the user. Once the user tag is generated, the access provision module 218 may compare the user tag with the data tag, associated with the target column. In this case, the user tag may be compared with the data tag of each column from column 26 to column 30. Furthermore, the access provision module 218 may compare a number of entities, associated with the user, and a cardinality of the user tag. Based on the comparison, the access provision module 218 may provide access to the user. In one embodiment, the user tag and the data tag of the column 28 may not be same. In this case, the access provision module 218 may be configured to provide access to the user for the column 26, column 27, column 29 and column 30.

In another exemplary embodiment, consider a column, from the columnar database, accessible by a US citizen and a Admin. In this case, at time of storing data at the column, in the columnar database, the data tag storage module 212, may be configured to generate a data bitmap. In one embodiment, the data bitmap may comprise bit associated with entities i.e. the US citizen and the Admin. In one aspect, the data tag storage module 212 may be configured to use randomization techniques to determine position of bit, associated with the entities, in the data bitmap. In one example, the data bitmap associated with the user may be as shown in table 1. In the table 1, 10^{th} position in the bitmap may indicate Admin and the 31^{st} positon in the bitmap may indicate US.

**Table 1: Data bitmap**

| | | | | | | | | | | | |
|---|---|---|---|---|---|---|---|---|---|---|---|
| | 0 | 0 | 1 | 0 | 0 | 0 | 0 | 0 | 1 | ..... | 0 |
| BitMap Index | (2) | | (10) | (11) | (12) | (13) | ...... | | (31) | ...... | (194) |

Further, the data tag storage module 212 may be configured to generate a data tag, associated with the user. The data tag may be generated based on a bitwise AND operation between the data bitmap and an entity position bitmap. In this case, table 2 may indicate the entity position bitmap. In one example, the AND operation between the table 1 and the table 2. In this case, table 3 may indicate the data tag associated with the user. The data tag (table 3) may comprise only two bitmap position i.e. 10^{th} position and 31^{st} position.

**Table 1: Data bitmap**

| | | | | | | | | | | | |
|---|---|---|---|---|---|---|---|---|---|---|---|
| | 0 | 0 | 1 | 0 | 0 | 0 | 0 | 0 | 1 | ..... | 0 |
| BitMap Index | (2) | | (10) | (11) | (12) | (13) | ...... | | (31) | ..... | (194) |

AND (bitwise operation)

**Table 2: Entity position bitmap**

| | | | | | | | | | | | |
|---|---|---|---|---|---|---|---|---|---|---|---|
| | 1 | 1 | 1 | 1 | 1 | 1 | 1 | 1 | 1 | ..... | 1 |
| BitMap Index | (2) | | (10) | (11) | (12) | (13) | ...... | | (31) | ..... | (194) |

**Table 3: Data tag**

| | | | | | | | | | | | |
|---|---|---|---|---|---|---|---|---|---|---|---|
| | 0 | 0 | 1 | 0 | 0 | 0 | 0 | 0 | 1 | ..... | 0 |
| BitMap Index | (2) | | (10) | (11) | (12) | (13) | ...... | | (31) | ..... | (194) |

Once the data tag is generated, the data tag storage module 212 may store the data tag at the column in the columnar database. In this case, the data tag may be stored along with the data.

In one embodiment, the obtaining module 214 may obtain one or more inputs from the user to access the column. The one or more inputs may be one or more entities associated with the user. In this case, the one or more entities, associated with the user, may be Admin and US citizen.

Upon receiving the one or more inputs, the generation module 216 may generate a user bitmap associated with the user. In this case, the user bitmap may comprise bitmap position associated with the entities i.e. the US citizen and the Admin. In one example, the user bitmap may be as shown in table 4.

**Table 4: User bitmap**

| | | | | | | | | | | | |
|---|---|---|---|---|---|---|---|---|---|---|---|
| | 0 | 0 | 1 | 0 | 0 | 0 | 0 | 0 | 1 | ..... | 0 |
| BitMap Index | (2) | | (10) | (11) | (12) | (13) | ...... | | (31) | ...... | (194) |

Further, the generation module 216 may generate a user tag, associated with the user. The user tag may be generated based on a bitwise AND operation between the user bitmap and the entity position bitmap. In one example, a bitwise AND operation may be performed between the table 4 and the table 2. In this case, the user tag may be shown in table 5.

**Table 4: User bitmap**

| | | | | | | | | | | | |
|---|---|---|---|---|---|---|---|---|---|---|---|
| | 0 | 0 | 1 | 0 | 0 | 0 | 0 | 0 | 1 | ..... | 0 |
| BitMap Index | (2) | | (10) | (11) | (12) | (13) | ...... | | (31) | ...... | (194) |

AND (bitwise operation)

**Table 2: Entity position bitmap**

| | | | | | | | | | | | |
|---|---|---|---|---|---|---|---|---|---|---|---|
| | 1 | 1 | 1 | 1 | 1 | 1 | 1 | 1 | 1 | ..... | 1 |
| BitMap Index | (2) | | (10) | (11) | (12) | (13) | ...... | | (31) | ...... | (194) |

**Table 5: User tag**

| | | | | | | | | | | | |
|---|---|---|---|---|---|---|---|---|---|---|---|
| | 0 | 0 | 1 | 0 | 0 | 0 | 0 | 0 | 1 | ..... | 0 |
| BitMap Index | (2) | | (10) | (11) | (12) | (13) | ...... | | (31) | ...... | (194) |

Once the user tag, associated with the user, is generated, the access provision module 218 compare the user tag and the data tag, associated with the column. Further, the data providing module 218 compares number of entities, associated with the user, and a cardinality of the user tag. In this case, the number of entities corresponds to 2. Further, the cardinality of the user tag corresponds to 2. Thus, the access provision module 218 may allow the user to access the data point, based on the comparison.

Exemplary embodiments discussed above may provide certain advantages. Though not required to practice aspects of the disclosure, these advantages may include those provided by the following features.

Some embodiments of the system and the method is configured to provide security to data.

Some embodiments of the system and the method is configured to improve query latency.

Some embodiments of the system and the method is configured to provide access to a user based on a multi-dimensional bitmap for multiple access.

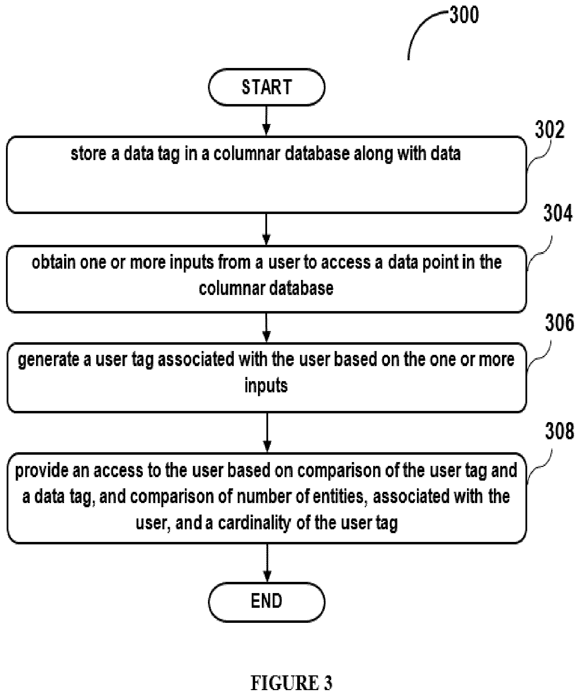

Referring now to figure 3, a method 300 for providing access to a user based on a multi-dimensional data structure, is disclosed in accordance with an embodiment of the present subject matter. The method 300 may be described in the general context of computer executable instructions. Generally, computer executable instructions can include routines, programs, objects, components, data structures, procedures, modules, functions, and the like, that perform particular functions or implement particular abstract data types. The method 300 may also be practiced in a distributed computing environment where functions are performed by remote processing devices that are linked through a communications network. In a distributed computing environment, computer executable instructions may be located in both local and remote computer storage media, including memory storage devices.

The order in which the method 300 is described is not intended to be construed as a limitation, and any number of the described method blocks can be combined in any order to implement the method 300 or alternate methods. Additionally, individual blocks may be deleted from the method 300 without departing from the spirit and scope of the subject matter described herein. Furthermore, the method 300 can be implemented in any suitable hardware, software, firmware, or combination thereof. However, for ease of explanation, in the embodiments described below, the method 300 may be considered to be implemented in the above described system 102.

At block 302, a data tag, associated with each data point, from a set of data points may be stored in a columnar database. Each data point, from the set of data points, may correspond to one of a row, a cell or a column of the columnar database. In one implementation, the data tag storage module 212 may store the data tag in the columnar database. In one aspect, the data tag may be stored along with data stored in the columnar database. The data tag, associated with each data point, may be generated based on a bitwise AND operation between a data bitmap, associated with the data point, and an entity positon bitmap. In one embodiment, the data bitmap, associated with each data point, may be based on one or more entities of a user allowed to access the data point from the columnar database. In another embodiment, the entity position bitmap may comprise a bit 1 at each bitmap position.

At block 304, one or more inputs may be obtained from the user to access a target data point from the columnar database. The target data point may be one of the row, the cell or the column of the columnar database. In one implementation, the input obtaining module 214 may obtain the one or more inputs from the user. In one aspect, the one or more inputs may correspond to one or more entities associated with the user.

At block 306, a user tag associated with the user may be generated. In one implementation, the tag generation module 216 may generate the user tag. In one embodiment, a user bitmap may be generated based on the one or more entities. Further, the data tag may be generated based on a bitwise AND operation between the user bitmap and the entity position bitmap.

At block 308, an access to the user may be provided. In one implementation, the access provision module 218 may provide access to the user. In one embodiment, the user tag may be compared with the data tag, associated with the target data point. Further, a number of entities, associated with the user, may be compared with a cardinality of the user tag. Based on the comparison of the user tag and the data tag, and the number of entities and the cardinality of the user tag, an access may be provided to the user.

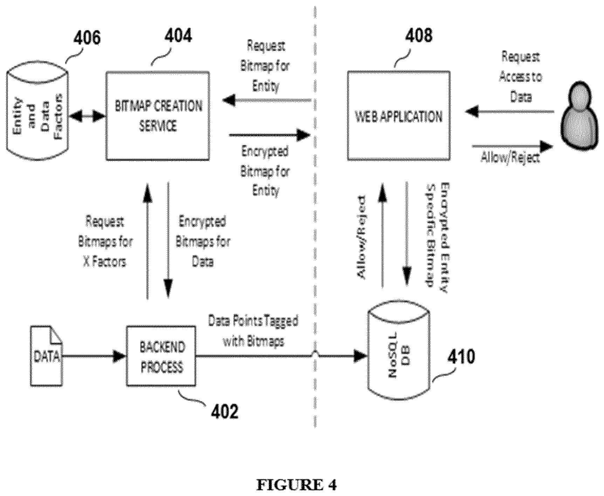

Referring now to figure 4, block diagram of a system providing access to a user based on a multi-dimensional data structure, is illustrated. The block diagram of the system comprises a backend processor 402, a bitmap creation service 404, an entity and data factors 406, a web application 408, and a NoSQL DB 410. The NoSQL DB 410 may correspond to a columnar database. The NoSQL DB 410 may comprise a set of data points. Each data point, from the set of data points, may correspond to a cell, a row or a column.

In one embodiment, at time of storing data in the NoSQL DB 410, the backend processor 402 may request a bitmap creation service 404 to generate a data bitmap. The bitmap creation service 404 may generate the data bitmap, associated with the data to be stored in the NoSQL DB 410. The data bitmap may be an n-dimensional data bitmap. The data bitmap may be generated based on an entity and data factors, extracted from the entity and data factors 406. Upon generation of the bitmap, position of bits, associated with the entity and data factors, may be determined using randomization technique. Further, the backend processor 402 may receive the data bitmap generated by the bitmap creation service 404. The backend processor 402 may generate a data tag, associated with the data bitmap. The data tag may be generated based on a bitwise AND operation between the data bitmap and an entity position bitmap. Further, the data tag may be stored in the NoSQL DB 410 along with the data.

In the embodiment, the web application 408 may obtain one or more inputs from a user to access a target data point from the NoSQL DB 410. The one or more inputs may indicate a request from the user to access the target data point. The one or more inputs may correspond to one or more entities associated with the user. Upon obtaining the one or more inputs, the web application 408 may request the bitmap creation service 404 to generate a user bitmap. The bitmap creation service 404 may generate the user bitmap based on the one or more entities. Once the user bitmap is received, the web application 408 may generate a user tag, associated with the user. The user tag may be generated based on the bitwise AND operation between the user bitmap and the entity position bitmap.

Further, the NoSQL DB 410 may compare the user tag, received at the web application, and the data tag, stored in the NoSQL DB 410. Based on the comparison, the NoSQL DB 410 may allow or reject the request of the user to access the target data point of the NoSQL DB 410.

In one embodiment, the advantage of the system, providing an access to a user based on a multi-dimensional data structure, includes that construction of the bitmap i.e. the data bitmap into the columnar database is a one-time process. Also, a separate system is used to generate the bitmap which would only be modified if there is a change in the factors/values. The system creates the user bitmap while a new user logs on to the system. There may be no communication between the system creating the bitmaps and the columnar database actually storing the data.

Although implementations for systems and methods for providing access to a user based on a multi-dimensional data structure have been described, it is to be understood that the appended claims are not necessarily limited to the specific features or methods described. Rather, the specific features and methods are disclosed as examples of implementations for providing access to the user based on a multi-dimensional data structure.

## Claims

1. A method for providing access to a user based on a multi-dimensional data structure, the method comprises steps of:
obtaining, by a processor, one or more inputs from a user to access target data point, associated with a columnar database, wherein the target data point corresponds to one of a row, a cell or a column of the columnar database, wherein the one or more inputs correspond to one or more entities, associated with the user, and information associated with the target data point;
generating, by the processor, a user tag associated with the user, wherein the user tag is generated based on:
generating a user bitmap associated with the user based on the one or more entities, wherein the user bitmap comprises bitmap positon value for the one or more entities; and
generating the user tag, associated with the user, based on a bitwise AND operation between the user bitmap and an entity position bitmap, wherein the entity position bitmap comprises a bit 1 at each bitmap position; and
providing, by the processor, an access to the user based on comparison of the user tag and a data tag, associated with the target data point, stored in the columnar database, and comparison of a number of entities, associated with the user, and a cardinality of the user tag.

2. The method of claim 1, further comprises storing the data tag, associated with each data point, in the columnar database based on:
generation of a data bitmap associated with each data point, from a set of data points, in the columnar database, wherein the data bitmap is corresponding to the one or more entities of the user;
generation of a data tag, associated with each data point, based on a bitwise AND between the data bitmap, associated with each data point, and the entity bitmap position; and
storing the data tag at each data point of the columnar database, wherein the data tag is stored along with data.

3. The method of claim 1, further comprises determining a position of bit, associated with the one or more entities, in the user bitmap, wherein the position of bit is determined using randomization techniques.

4. The method of claim 1, wherein the cardinality of the user tag is greater than zero, and wherein the cardinality of the user tag corresponds to number of 1's present in the user tag.

5. The method of claim 1, further comprises allowing the user to access the data stored at the target data point in the columnar database, when the user tag and the data tag is same, and the number of entities associated with the user and the cardinality of the user tag is same.

6. A system for providing access to a user based on a multi-dimensional data structure, the system comprising:
a memory;
a processor coupled to the memory, wherein the processor is configured to execute programmed instructions stored in the memory to:
obtain one or more inputs from a user to access a target data point, associated with a columnar database, wherein the target data point corresponds to one of a row, a cell or a column of the columnar database, wherein the one or more inputs correspond to one or more entities, associated with the user, and information associated with the target data point;
generate a user tag associated with the user, wherein the user tag is generated based on:
generating a user bitmap associated with the user based on the one or more entities, wherein the user bitmap comprises bitmap positon value for the one or more entities; and
generating the user tag, associated with the user, based on a bitwise AND operation between the user bitmap and an entity position bitmap, wherein the entity position bitmap comprises a bit 1 at each bitmap position; and
provide an access to the user based on comparison of the user tag and a data tag, associated with the target data point, stored in the columnar database, and comparison of a number of entities, associated with the user, and a cardinality of the user tag.

7. The system of claim 6, further configured to store the data tag, associated with each data point, in the columnar database based on:
generation of a data bitmap associated with each data point, from a set of data points, in the columnar database, wherein the data bitmap is corresponding to the one or more entities of the user;
generation of a data tag, associated with each data point, based on a bitwise AND between the data bitmap, associated with each data point, and the entity bitmap position; and
storing the data tag at each data point of the columnar database, wherein the data tag is stored along with data.

8. The system of claim 6, further configured to determine a position of bit, associated with the one or more entities, in the user bitmap, wherein the position of bit is determined using randomization techniques.

9. The system of claim 6, wherein the cardinality of the user tag is greater than zero, and wherein the cardinality of the user tag corresponds to number of 1's present in the user tag.

10. The system of claim 6, further configured to allow the user to access the data stored at the target data point in the columnar database, when the user tag and the data tag is same, and the number of entities associated with the user and the cardinality of the user tag is same.

11. A computer program product having embodied thereon a computer program for providing access to a user based on a multi-dimensional data structure, the computer program product comprises:
a program code for obtaining one or more inputs from a user to access a target data point, associated with a columnar database, wherein the target data point corresponds to one of a row, a cell or a column of the columnar database, wherein the one or more inputs correspond to one or more entities, associated with the user, and information associated with the target data point;
a program code for generating a user tag associated with the user, wherein the user tag is generated based on:
generating a user bitmap associated with the user based on the one or more entities, wherein the user bitmap comprises bitmap positon value for the one or more entities; and
generating the user tag, associated with the user, based on a bitwise AND operation between the user bitmap and an entity position bitmap, wherein the entity position bitmap comprises a bit 1 at each bitmap position; and
a program code for providing an access to the user based on comparison of the user tag and a data tag, associated with the target data point, stored in the columnar database, and comparison of a number of entities, associated with the user, and a cardinality of the user tag.
